Europäisches Patentamt

European Patent Office

Office européen des brevets

(19)

(11) Veröffentlichungsnummer: **0 091 592**
A1

(12) ## EUROPÄISCHE PATENTANMELDUNG

(21) Anmeldenummer: 83102978.0

(22) Anmeldetag: 25.03.83

(51) Int. Cl.³: **G 06 F 3/04**

(30) Priorität: 02.04.82 DE 3212401

(43) Veröffentlichungstag der Anmeldung:
19.10.83 Patentblatt 83/42

(84) Benannte Vertragsstaaten:
AT BE CH DE FR GB IT LI LU NL SE

(71) Anmelder: Müller, Otto
Am Guckenbühl 10
D-7750 Konstanz 16(DE)

(72) Erfinder: Müller, Otto
Am Guckenbühl 10
D-7750 Konstanz 16(DE)

(74) Vertreter: Riebling, Günter, Dr. Ing. et al,
Rennerle 10 Postfach 3160
D-8990 Lindau(DE)

(54) Prioritätensteuerschaltung für digitale Rechenanlagen.

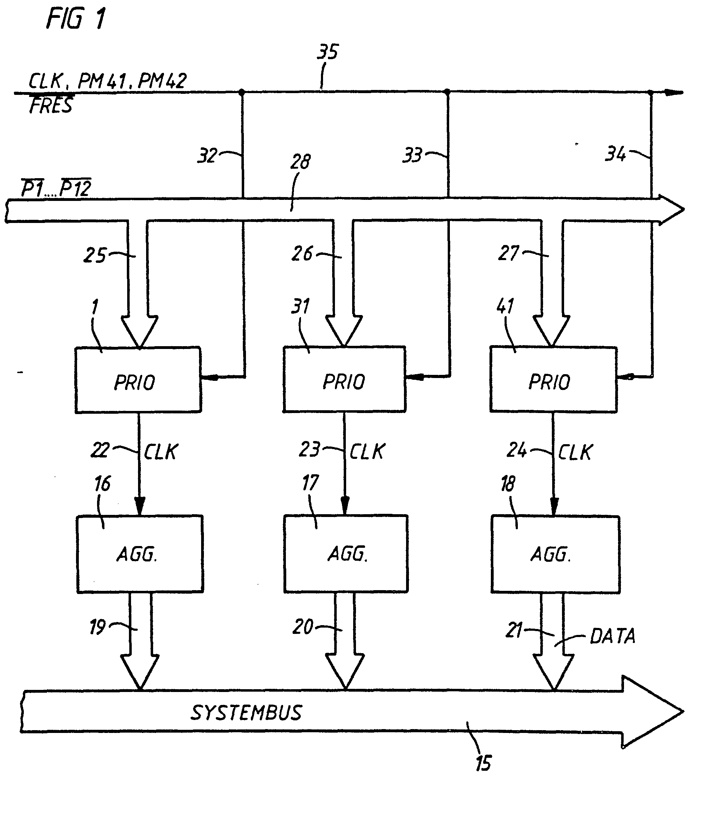

(57) Die Erfindung betrifft eine Prioritätensteuerschaltung für digitale Rechenanlagen. Die Erfindung hat die Aufgabe, eine Prioritätensteuerschaltung so weiterzubilden, daß der bisherige beträchtliche, zusätzliche Programmaufwand bei der Programmierung des Mikro-Programms entfällt und daß eine wesentlich einfachere Ansteuerung der Aggregate vonseiten der CPU möglich ist. Die Erfindung ist dadurch gekennzeichnet, daß die Datenausgänge (19,20,21) sämtlicher Aggregate (16,17,18) unmittelbar auf den Systembus (15) geschaltet sind, daß jedem Aggregat (16,17,18) eine Priorität fest zugeordnet ist und daß jedem Aggregat (16,17,18) eine Prioritätensteuereinheit (1,31,41) zugeordnet ist, welche parallel am Eingang sämtliche Prioritätssignale (11) aller vorhandenen Aggregate (16,17,18) erfaßt und welche den Takt für das betreffende Aggregat (16,17,18) unterbricht, wenn die Prioritätensteuereinheit (1,31,41) ein Prioritätssignal (11) eines prioritätshöheren Aggregats (16,17,18) empfängt, (Fig. 1).

FIG 1

EP 0 091 592 A1

------------------------------------------------------------

Prioritätensteuerschaltung für
digitale Rechenanlagen

------------------------------------------------------------


Die Erfindung betrifft eine Schaltung nach dem Oberbegriff des Patentanspruchs 1.


Bei der Mikro-Programmierung digitaler Rechenanlagen
besteht bisher ein beträchtlicher Programmierungsaufwand
bei der Entwicklung von Steuerprogrammen für externe
Aggregate, wie zum Beispiel Magnetband-Einheit, Drucker,
Bildschirm, zentrales Rechenwerk, DMA-Kanal, usw..
Zur Erläuterung sei angemerkt, daß alles, was außerhalb
eines zentralen Systembus liegt, als externes Aggregat
im nachfolgenden definiert wird.

Bei der Schaffung von Systemprogrammen für den Betrieb
der digitalen Rechenanlage und bei der Schaffung der
entsprechenden Treiber-Programme (driver) für die externen Aggregate stehen bisher beträchtliche Probleme
bei der Programmierung der sogenannten Prioritätensteuerfrage. Bisher müssen eine Vielzahl von Programmbefehlen in ein solches Mikro-Programm eingebaut werden,
die sicherstellen, daß das angesprochene Aggregat sich
nur dann auf den Systembus aufschalten darf, wenn keine
Anforderungen auf Aufschaltung von prioritätsranghöheren Aggregaten vorliegen. Man muß zunächst prüfen,
ob solche Anforderungen prioritätshöherer Aggregate vorliegen, um dann dem anzusprechenden Aggregat den Aufschaltbefehl zu geben.
Sodann muß im Mikroprogramm geprüft werden, ob das angesprochene Aggregat sich tatsächlich auf den Systembus aufgeschaltet hat, und ob es das übertragen hat und wann die Datenübertragung zu Ende ist (set flag, clearflag, Warteschleife usw.). Bei einer solchen Mikro-Programmierung bestand bisher immer die Gefahr, daß Daten verloren gehen, und es entstand ein zusätzlicher Programmierungsaufwand durch die erforderliche einzubauende Rückmeldung in das Programm, ob das betreffende Aggregat dann die Daten erhalten hat oder nicht. Die vorliegende Erfindung hat sich die Aufgabe gestellt, eine Prioritätensteuerschaltung der eingangs genannten Art so weiterzubilden, daß der vorher erwähnte, beträchtliche, zusätzliche Programmaufwand bei der Programmie-rung des Mikro-Programmes entfällt und daß eine wesent-lich einfachere Ansteuerung der Aggregate vonseiten der CPU möglich ist.

Zur Lösung der gestellten Aufgabe dient die im Anspruch 1 gegebene technische Lehre.

Wesentliches Merkmal dieser Lehre ist, daß jetzt eine Mikro-Programmierung der einzelnen Aggregate nicht mehr erforderlich ist. Vielmehr wird den einzelnen Aggregaten eine feste Priorität bei der Implementierung in das Rechnersystem zugeordnet, wobei selbstverständlich ist, daß diese feste Priorität jederzeit auf Wunsch veränderbar ist. Erfindungsgemäß wirkt die Prioritätensteuerung auf den Takt für das betreffende Aggregat ein. Dies bedeutet, daß, wenn sich das Aggregat aufgrund der ihm zugeordneten Priorität nicht auf den Systembus aufschalten darf (weil ranghöhere Aggregate einen Aufschaltwunsch angemeldet haben), dann wird dieses Aggregat einfach vom Systemtakt abgeschnitten und führt keine Rechenoperationen mehr aus, solange, bis keine ranghöheren Anforderungen zur Aufschaltung anderer Aggregate auf den Systembus vorliegen. Zu diesem Zeitpunkt erhält dieses betreffende Aggregat den Systemtakt wieder zugeteilt und wirkt sofort und unmittelbar wieder auf den Systembus ein.

Es entfallen also auch komplizierte Steuerschaltungen am Ausgang eines solchen Aggregates, die überwachen, ob das Aggregat sich überhaupt mit der ihm zugeordneten Priorität auf den Systembus aufschalten darf. Erfindungsgemäß liegen alle Aggregate parallel und ohne Zwischenschaltung irgendwelcher Kontroll-Organe am Systembus an. Darf sich ein Aggregat auf den Systembus aufschalten, so bekommt es den Systemtakt zugeteilt und arbeitet unmittelbar auf den Systembus. Gleichzeitig schaltet es mit seiner Aufschaltung auf den Systembus alle anderen, prioritätsniedrigeren Aggregate ab, die aufgrund des ihnen fehlenden Taktes keine Rechenoperationen mehr ausführen können und demzufolge nicht auf den Systembus einwirken können.

Hiermit entfällt der vorher erwähnte, große Programmierungsaufwand bei der Schaffung entsprechender Mikroprogramme, denn jedes Aggregat kann so im Programm behandelt werden, als habe es die höchste Priorität; im Programm braucht man sich nicht mehr darum zu kümmern, daß andere Programme eine höhere Priorität besitzen. Die Aggregate machen sozusagen die Prioritätenfrage unter sich auf der Hardware-Ebene aus, ohne daß eine Rückwirkung auf das System-Programm besteht und bestehen muß. Man muß also bei der Mikro-Programmierung (sei es nun Programmierung eines Controllers oder der CPU) nicht mehr prüfen, ob es nun die ihm zustehende Priorität erhalten hat oder nicht, und ob die ausgesendeten Daten angekommen sind oder nicht. Nach der Erfindung kann man davon ausgehen, daß, wenn das angesprochene Aggregat (das heißt der angesteuerte Controller) seine Daten sendet, daß er ihm die zustehende Priorität hat und daß alle Daten ankommen.

- 4 -

Kollissionsprobleme mit anderen Aggregaten gibt es
nicht mehr, weil während der Aussendung Daten von einem
Controller sämtliche anderen Controller abgeschaltet
sind.

Sämtliche Prioritätenleitungen aller Controller werden
also parallel in Form eines Priotitätenbus zu sämtlichen
Controllern im Systemgehäuse des Rechners durchgeschleift. Kommt nun von der CPU die Aufforderung an
einen Controller, sich auf den Systembus aufzuschalten,
dann generiert die Prioritätensteuerung zunächst ein
Signal, was auf der entsprechend zugeordneten Prioritatenleitung allen anderen Controllern mitgeteilt wird.
Die jedem Controller zugeordnete Prioritätensteuerschaltung prüft nun, ob das einlangende Prioritätensteuersignal ranghöher oder rangniedriger ist, als die
dem betreffenden anderen Controller zugeordnete Priorität. Ist das Signal ranghöher, dann schaltet die Prioritätensteuerschaltung den Takt des betreffenden Controllers ab, und der Controller bleibt stumm, solange, bis
er einen Steuerbefehl zur Aufschaltung auf den Systembus
von der CPU erhält, und gleichzeitig keine ranghöheren
Aufschaltewünsche von anderen Controllern vorliegen.

Eine schaltungsmäßig einfache Anordnung ergibt sich dadurch, daß die Prioritätensteuereinheit aus einem NAND-
Gatter besteht, an dessen Eingängen sämtliche Prioritatensignale aller vorhandenen Aggregate anliegen, daß der
Ausgang den einen Eingang eines nachgeschalteten UND-
Gatters bildet, an dessen anderen Eingang ein Steuereingang angeschaltet ist, der den Befehl zur Aufschaltung
des Aggregats auf den Systembus von der zentralen Recheneinheit erhält, und daß der Ausgang des UND-Gatters über
ein weiteres Gatter mit dem Systemtakt (CLK) verknüpft
ist, an dessen Ausgang (Leitung) die Taktleitung für das
Aggregat angeschaltet ist.

0091592

Es wird bevorzugt, wenn jedem bestimmten Aggregat schaltungsmäßig eine Priorität dadurch zuzuordnen ist, daß die Verbindung der vom Prioritätenbus abgeleiteten Prioritätssignale zu den Eingängen des NAND-Gatters der Prioritätensteuereinheit unterbrochen ist und wahlweise durch einen handsteckbaren Stecker überbrückbar ist.

Das Merkmal des Anspruches 4 gewährleistet, daß der Aufschaltewunsch des betreffenden Controllers, den er in Form eines Steuerbefehls von der CPU erhält, allen anderen Aggregaten über die Prioritätsleitungen mitgeteilt wird. Damit können alle anderen Aggregate überprüfen, ob sie selbst einen Aufschaltewunsch vorliegen haben und ob ihre Priorität höher ist, als die Priorität des Aggregates, von dem der Aufschaltewunsch empfangen wird.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Alle in den Unterlagen offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand einer lediglich einen Ausführungsweg darstellenden Zeichnung näher erläutert. Hierbei gehen aus der Zeichnung und ihrer Beschreibung weitere erfindungswesentliche Merkmale und Vorteile der Erfindung hervor.

Es zeigen:

Fig. 1: schematisiert gezeichnetes Blockschaltbild der Anschaltung der Aggregate mit ihren Prioritätensteuerschaltungen auf den Systembus;

Fig. 2: schematisiert gezeichnetes Teilschaltbild der Prioritätensteuerung;

Fig. 3: Signalverlauf am Ausgang 9 des Gatters 2 für die Beschaltung der Eingänge der Prioritätensteuereinheit gemäß Figur 2;

Fig. 4 bis 8: Signalverläufe und Zeit-Diagramm beim Aufschalten auf den Systembus.

Nach Figur 1 sollen drei Aggregate 16,17,18 berechtigt sein, über ihre Datenbus-Leitungen 19,20,21 sich auf den Systembus 15 aufschalten zu dürfen. Erfindungsgemäß werden die Aufschaltewünsche und die dabei entstehenden Prioritäten-Kollissionen nicht softwear-mäßig behandelt, sondern hardwear-mäßig gelöst. Jedes Aggregat 16,17,18 erhält seinen Takt über die Taktleitung 22,23,24 nicht unmittelbar vom Systemtakt, sondern vom Ausgang einer Prioritätensteuereinheit 1,31,41. Die Prioritätensteuereinheiten 1,31,41 sind sämtlich parallel durch entsprechende Prioritäten-Signal-Bündel 25,26,27 miteinander verbunden. Alle Prioritäten-Signal-Bündel 25,26,27 laufen in Form eines Prioritätenbus 28 durch das gesamte Gehäuse eines Rechners.

Wichtig ist, daß sämtliche Prioritätensteuereinheiten 1,31,41 nicht nur vom Prioritätenbus 28 empfangen, sondern genauso auch in den Prioritätenbus 28 hineinsenden, d.h., jede Prioritätensteuereinheit hört die andere Prioritätensteuereinheit mit.

Der Befehl, daß sich ein betreffendes Aggregat 16 oder 17 oder 18 auf den Systembus 15 aufschalten soll, wird der Prioritätensteuereinheit 1,31,41 über einen entsprechenden Steuereingang 32,33,34 mitgeteilt. Alle Steuereingänge sind ebenfalls in Form eines Steuerbus 35 durch das Gehäuse des Rechnersystems geschleift.

Es wird nun angenommen, daß das Aggregat 16 die höchste Priorität hat und die Aggregate 17 und 18 eine rangniedrigere Priorität. Aggregat 16 soll sich nun auf den Systembus 15 aufschalten, und die den Aggregaten 17 und 18 zugeordneten Prioritätensteuereinheiten 31 und 41 schalten den entsprechenden Takt auf den Taktleitungen 23,24 während dieser Zeit ab.

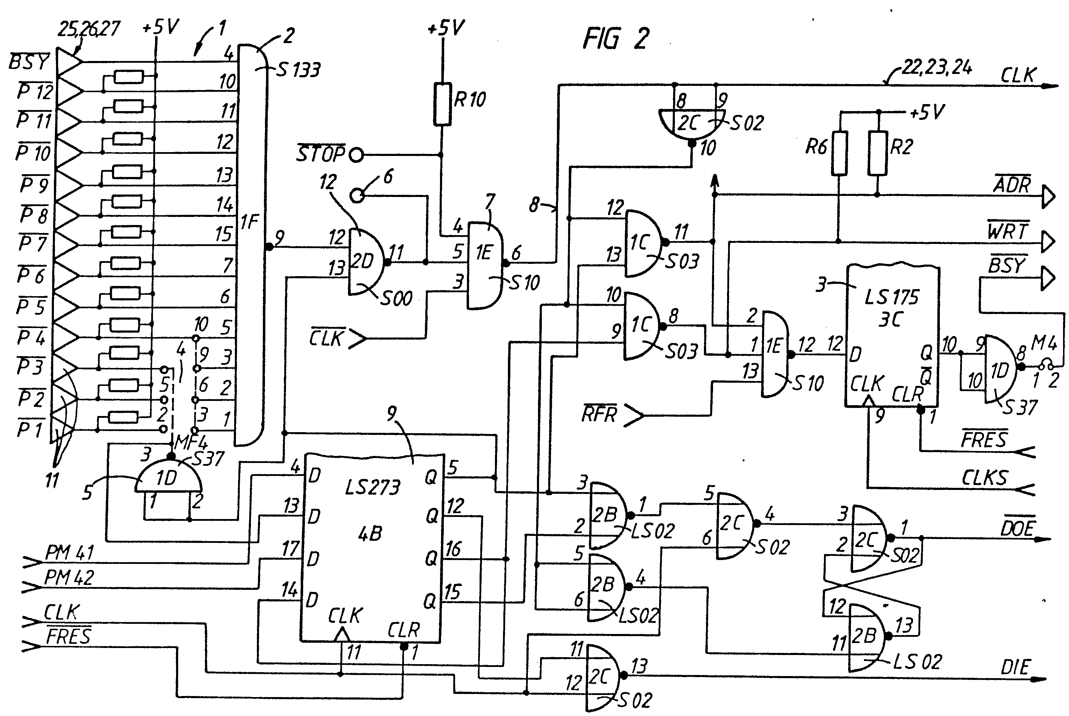

Aggregat 16 erhält hierbei einen Steuerbefehl über den Steuerbus 35, der über den Steuereingang 32 der Prioritätensteuereinheit 1 mitgeteilt wird. Diese Prioritätensteuereinheit 1 ist intern fest mit einer bestimmten Priorität verdrahtet (vergleiche die spätere Erläuterung anhand der Figur 2), und es wird der über den Steuereingang 32 mitgeteilte Aufschaltewunsch über dem Prioritätenbus 28 und über die dem Aggregat zugeteilte Prioritätenleitung (z.B. $\overline{P3}$) allen anderen Prioritätensteuereinheiten 31,41 mitgeteilt. Bei dieser Prioritätensteuereinheiten wird das Signal auf der Leitung $\overline{P3}$ als ranghöher erkannt und über die noch zu erläuternde Prioritätensteuereinheit 31,41 der Takt (CLK) abgeschaltet.

Anhand der Fig. 2 folgen weitergehende Erläuterungen des Prinzips der Prioritätensteuereinheit 1.

Es wird zunächst darauf hingewiesen, daß die verwendeten Baustein-Bezeichnungen (S00, S02, S03, S10, S37, LS02,

- 8 -

LS273, S133) genormte Typenbezeichnungen der Firma TEXAS INSTRUMENTS sind, und daß aufgrund dieser Typenbezeichnungen die gewählten Bauteile ohne weiteres zu identifizieren sind.

Die Prioritätensteuereinheit 1 besteht zunächst aus einem NAND-Gatter 2, an dessen Eingängen 1...15 die Prioritätensignale 11 sämtlicher im System vorhandener Prioritätensteuereinheiten 1,31,41 anliegen. Die Priorität $\overline{P1}$ ist die rangniedrigste und die Priorität $\overline{BSY}$ ist die ranghöchste Priorität. Auf der Prioritätenleitung $\overline{BSY}$ sitzt der Systembus selbst, der also stets durchgeschaltet sein soll, während die CPU auf einer relativ rangniedrigen Priorität, z.B. $\overline{P3}$, sitzt.

Sämtliche Prioritätensignale 11 sind über entsprechende Hochzieh-Widerstände mit der Spannungsversorgung verbunden, damit ungeschaltete Eingänge ($\overline{P1}$, $\overline{P2}$) keinen undefinierten Schaltzustand einnehmen.

Die Schaltung in Figur 2 zeigt die Stellung des handsteckbaren Steckers 4 zur Zuordnung einer bestimmten Priorität zu einer bestimmten Prioritätensteuereinheit gerade für den Fall der CPU. In der Praxis sind sämtliche Prioritätensignale 11 von den Eingängen des Gatters 2 abtrennbar und entsprechend dem in Fig. 2 angedeuteten Beispiel wird die für eine bestimmte Prioritätensteuereinheit 1 ausgewählte Priorität so gesteckt, daß alle prioritätshöheren Leitungen mit dem Prioritätensignalbündel 25,26,27 verbunden bleiben, während die prioritätsniedrigeren Leitungen ($\overline{P1}$ und $\overline{P2}$) von den Eingängen abgetrennt werden.

Es wird nun der Fall angenommen, daß die CPU einen Aufschaltwunsch auf den Systembus erhält. Diesen Aufschalt-

wunsch erhält sie über den Steuereingang 32.

Im Systemprogramm sind hierbei beispielweise die Bits 41 und 42 für die Anmeldung des Aufschaltewunsches reserviert. Über die Leitungen 10 wird also die Prioritätensteuereinheit 1 über den Steuereingang 32 angesteuert. Der hierdurch erzeugte Steuerimpuls wirkt auf ein Flip-Flop 9, das am Ausgang Q ein Signal FADR generiert, das sowohl an den Eingang eines Gatters 5 als auch an den Eingang eines Gatters 12 angelegt wird.

Am Ausgang des Gatters 5 wirkt das so erzeugte Signal über den handsteckbaren Stecker 4 auf die Leitung $\overline{P3}$, d.h. über diese Leitung wird allen anderen Prioritätensteuereinheiten sämtlicher anderer Controller der Aufschaltewunsch mitgeteilt.

Es wird nun weiter angenommen, daß gleichzeitig ein prioritätshöherer Aufschaltewunsch von einem anderen Controller, beispielsweise von dem Controller auf der Leitung $\overline{P10}$, besteht. Das Gatter 2 wird dadurch am Ausgang (Punkt 9) low, ebenso wird das Gatter 12 am Ausgang 6 low und blockiert damit den Takt am Gatter 7, so daß am Ausgang 8 des Gatters 7 der Takt CLK für das betreffende Aggregat nicht mehr erscheint. Das Aggregat wurde also dadurch vom Takt abgeschaltet, daß zwar ein Aufschaltewunsch für dieses Aggregat vorlag (Bits PM 41 und PM42) daß aber gleichfalls ein ranghöherer Aufschaltewunsch an den anderen Controller vorlag, der den Takt von dem betreffenden in Figur 2 beschriebenen Aggregat abschaltete.

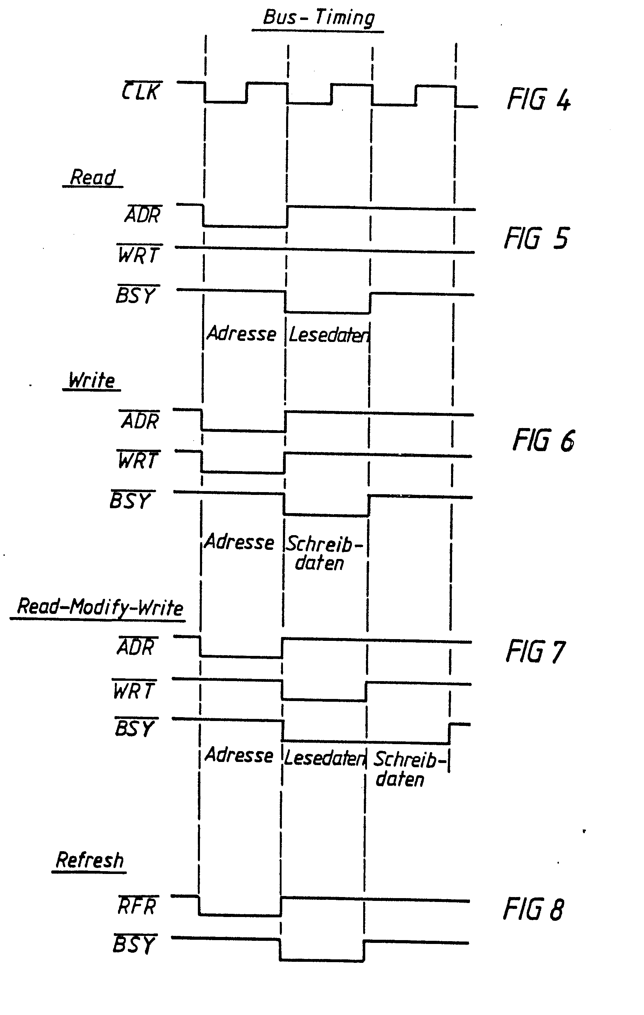

Von dem Aggregate-Takt CLK werden noch verschiedene andere Signale abgeleitet, wie es in der hier gezeigten Steuerungsschaltung gezeigt ist. Über entsprechende Gatter werden die Signale $\overline{ADR}$, $\overline{WRT}$ und $\overline{BSY}$ abgeleitet. Das Verhältnis dieser Signale zueinander ist anhand der Figuren 4 bis 8 näher beschrieben.

Das Signal PM42 ist das Signal Schalten für Schreiben, das Signal FADR von dem Bit 41 (PM 41) herrührend bedeutet Prioritätenanforderung und wenn nicht ein Signal für Schreiben abgegeben wird, bedeutet es eine Anforderung für Lesen.

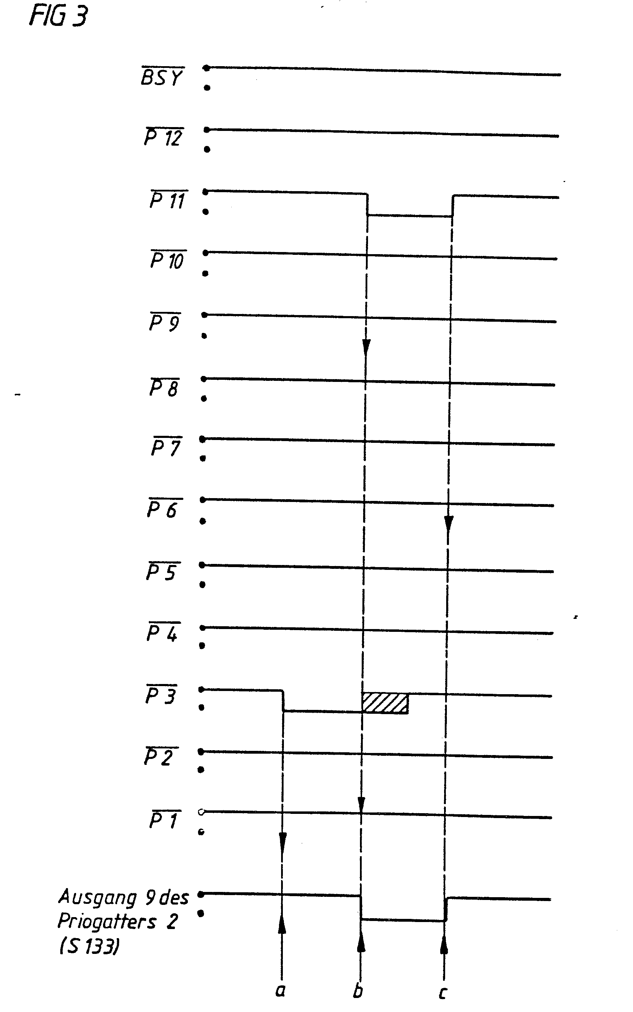

Die Figur 3 zeigt die Eingangssignale am Eingang des Gatters 2. Es ist ersichtlich, daß zunächst alle Signale auf 1 sind und daß sodann sowohl auf der Leitung $\overline{P11}$ als auch auf der Leitung $\overline{P3}$ ein Aufschaltewunsch auf den Systembus vorliegt.

Der Aufschaltewunsch auf der Leitung $\overline{P3}$ wurde vom System-Programm her generiert, nämlich durch Setzen der Bits 41 und 42 am Steuereingang 32.
Die Umschaltung des Flip-Flops 9 bewirkt die Ansteuerung des Gatters 5, dessen Ausgang 3 Null wird und dieses Signal wird auf der Leitung $\overline{P3}$ allen anderen Controllern mitgeteilt.
Der durch System-Programm erzeugte Aufschaltewunsch wird zunächst zwischen den Punkten a und b erfüllt, d.h., der Ausgang 9 des Gatters 2 bleibt high und der Systemtakt wird auf den Controller durchgeschaltet, so daß dieser sich während den Punkten a und b auf den Systembus aufschaltet. Während der Aufschaltung von $\overline{P3}$ auf den Systembus kommt aber ein höherer Aufschaltewunsch auf der Leitung $\overline{P11}$ an. Ab dem Punkt b schaltet daher die in Figur 2 gezeigte Schaltung den $\overline{P3}$ zugeordneten Controller ab (schraffierter Bereich).

Das auf der Leitung $\overline{P11}$ ankommende Prioritätensteuersignal schaltet nämlich den Ausgang 9 am Punkt b auf low, so daß der Takt CLK von dem in Figur 2 gezeigten Aggregat abgeschaltet wird (für die Dauer des schraffierten Bereichs), und zwar solange, (Punkt c) bis auf $\overline{P11}$ kein Prioritätssteuersignal mehr vorliegt.

Aus der Schaltung in Figur 2 wird ersichtlich, daß nur prioritätshöhere Signale das Gatter 2 umschalten können, während prioritätsniedrigere Signale (auf den Leitungen $\overline{P1}$ und $\overline{P2}$ vom Gattereingang abgetrennt sind und dadurch keinen Einfluß auf das Gatter 2 haben.

Der handsteckbare Stecker 4 ist im Ausführungsbeispiel nur in seiner Beschaltung für das Aggregat der Leitung $\overline{P3}$ gezeigt. In der Praxis ist der handsteckbare Stecker 4 für alle Eingangsleitungen des Gatters 2 steckbar, d.h. es können alle Eingangsleitungen ($\overline{P1}$ bis $\overline{P12}$) vom Eingang des Gatters 2 abgetrennt werden, um dann jeweils - sinngemäß, wie in Figur 2 gezeigt - den an den nichtabgetrennten Bereich sich anschließenden Eingang mit dem Ausgang 3 des Gatters 5 zu verbinden. Hierdurch kann jedem Controller eine beliebige Priorität mit dem handsteckbaren Stecker 4 zugeordnet werden.

Die Figuren 4 - 8 zeigen das Bus-Timing. Es ist ersichtlich, daß der Takt $\overline{CLK}$ im Lesemodus (Figur 5) eine andere Signalfolge auslöst, als im Schreibmodus (Figur 6), oder im kombinierten Lese-Schreib-Modus. (Figur 7). Figur 8 zeigt das Signal-Verhältnis des Refresh-Signals im Verhältnis zum $\overline{BSY}$-Signal. Das letztgenannte Signal ist dem Controller für den Systembus zugeordnet.

- 12 -

Patentansprüche
-------------------------------------

1. Schaltung zur Steuerung der Priorität der Aufschaltung verschiedener externer Aggregate auf den Systembus einer digitalen Rechenanlage unter Einfluß eines Systemtaktes,
dadurch gekennzeichnet, daß die Datenausgange (19,20,21) sämtlicher Aggregate (16,17,18) unmittelbar auf den Systembus (15) geschaltet sind, daß jedem Aggregat (16,17,18) eine Priorität fest zugeordnet ist und daß jedem Aggregat (16,17,18) eine Prioritätensteuereinheit (1,31,41) zugeordnet ist, welche parallel am Eingang sämtliche Prioritätssignale (11) aller vorhandenen Aggregate (16,17,18) erfaßt und welche den Takt für das betreffende Aggregat (16,17,18) unterbricht, wenn die Prioritätensteuereinheit (1,31,41) ein Prioritätssignal (11) eines prioritätshöheren Aggregats (16,17,18) empfängt, (Fig. 1).

2. Schaltung nach Fig. 1,
dadurch gekennzeichnet, daß die Prioritätensteuereinheit (1,31,41) aus einem NAND-Gatter (2) besteht, an dessen Eingängen sämtliche Prioritätensignale (11) aller vorhandenen Aggregate (16,17,18) anliegen, daß der Ausgang den einen Eingang eines nachgeschalteten UND-Gatters (12) bildet, an dessen anderen Eingang ein Steuereingang (32,34,34) angeschaltet ist, der den Befehl zur Aufschaltung des Aggregats (16,17,18) auf den Systembus (15) von der zentralen Recheneinheit erhält, und daß der Ausgang des UND-Gatters (12) über ein weiteres Gatter (7) mit dem Systemtakt (CLK) verknüpft ist, an dessen Ausgang (Leitung 8) die Taktleitung (22,23,24) für das Aggregat (16,17,18) angeschaltet ist, (Fig. 2).

- 13 -

3. Schaltung nach Anspruch 1 und 2,
d a d u r c h   g e k e n n z e i c h n e t , daß jedem
bestimmten Aggregat (16,17,18) schaltungsmäßig eine
Priorität dadurch zuzuordnen ist, daß die Verbindung der
vom Prioritätenbus (28) abgeleiteten Prioritätssignale
(11) zu den Eingängen des NAND-Gatters der Prioritätensteuereinheit (1,31,41) unterbrochen ist und wahlweise
durch einen handsteckbaren Stecker (4) überbrückbar ist.

4. Schaltung nach Anspruch 3,
d a d u r c h   g e k e n n z e i c h n e t , daß zur
Zuordnung einer bestimmten Priorität für ein bestimmtes
Aggregat (16,17,18) die dem Aggregat (16,17,18) zugeordnete Prioritätsleitung($\overline{P1}...\overline{P12}$) in ihrer Verbindung
zum Eingang des NAND-Gatters (2) unterbrochen ist und
mit dem Ausgang einer Schaltung (5,9) verbunden ist,
die ein Signal auf diese Prioritätsleitung ($\overline{P1} ... \overline{P12}$)
aussendet, wenn das betreffende Aggregat (16,17,18)
einen Aufschaltbefehl auf den Systembus (15) über den
Steuerbus (35) erhält.

5. Schaltung nach Anspruch 3 und 4,
d a d u r c h   g e k e n n z e i c h n e t , daß alle
in der Prioritätsrangfolge höher liegenden Eingänge des
NAND-Gatters (2) mit den zugeordneten Prioritätsleitungen ($\overline{P1} ... \overline{P12}$) verbunden sind und daß alle in der
Prioritätsfolge unterhalb einer bestimmten, gewählten
Priorität eines Aggregats (16,17,18) liegenden Eingänge
des NAND-Gatters (2) vom Prioritätenbus (28) abgetrennt
sind.

FIG 1

FIG 2

FIG 3

0091592

Ausgang 9 des
Priogatters 2
(S 133)

4/4

0091592

Bus-Timing

FIG 4

Read

FIG 5

Adresse | Lesedaten

Write

FIG 6

Adresse | Schreib-daten

Read-Modify-Write

FIG 7

Adresse | Lesedaten | Schreib-daten

Refresh

FIG 8

M (6) 603

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-4 084 233 (HONEYWELL)<br>* Spalte 1, Zeilen 40-60; Spalte 2, Zeilen 1-47, 65-68; Spalte 3, Zeilen 1-9, 25-39; Figur * | 1 | G 06 F 3/04 |
| A | GB-A-2 060 229 (MAGNUSON COMPUTER)<br>* Seite 1, Zeilen 43-59; Seite 3, Zeilen 16-28; Seite 8, Zeilen 39-63; Seite 9, Zeilen 1-33; Figuren 1,2,6 * | 1 | |

RECHERCHIERTE SACHGEBIETE (Int. Cl. ³)

G 06 F 3/04

Der vorliegende Recherchenbericht wurde für alle Patentansprüche erstellt.

| Recherchenort<br>DEN HAAG | Abschlußdatum der Recherche<br>13-07-1983 | Prüfer<br>DHEERE R.F.B.M. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503 03 82